# EUROPEAN PATENT SPECIFICATION

(11) **EP 0 819 729 B1**
(45) Date of publication and mention of the grant of the patent: **28.03.2001**
(21) Application number: 97304910.9
(22) Date of filing: 04.07.1997
(51) Int. Cl.: C08K 5/16, C08K 13/02

(54) **Antistatic agent for polymer compositions**
Antistatik-Reagenz für Polymerzusammensetzungen
Agent antistatique pour compositions polymériques

(30) Priority: 15.07.1996 FR 9608820
(43) Date of publication of application: 21.01.1998
(73) Proprietor: GENERAL ELECTRIC COMPANY, Schenectady, NY 12345 (US)
(72) Inventor: Dumont, Jean-Marie Gerard Louis, 60140 Rosoy par Liancourt (FR)
(74) Representative: Szary, Anne Catherine, Dr.

(56) References cited:
- EP-A- 0 213 788
- EP-A- 0 769 522
- US-A- 4 764 428

## Description

The present invention relates generally to antistatic agents for polymer compositions.

It is known, in order to prevent dust from being deposited on articles moulded from polymer compositions, such as moulded articles made of acrylonitrile-butadiene-styrene (ABS) resin, to incorporate an antistatic or antidust agent into these compositions.

In moulding compositions, in particular ones based on ABS resin, C₁₃-C₁₅ ethoxylated amines have usually been used as antistatic agents. These ethoxylated amines are in liquid form.

In individual production, the liquids are difficult to handle. The liquid antistatic agent is generally injected during extrusion of the polymer composition close to the die, which gives rise to the risk of fire.

Moreover, when the technique of stock mixtures is used, that is to say the technique consisting in preparing a premix of the adjuvants with some of the resinous components of the polymer composition, the premix has a tendency to form agglomerates which stick to the walls of the supply and metering system during the formation of the final composition on a twin-screw extruder.

Furthermore, the liquid antistatic agent is packaged in drums and it is not possible to extract all of the contents of the drum, which leads to a loss of starting material and an increase in the manufacturing costs.

Lastly, when such a liquid antistatic agent is used, dispersed in an article made of moulded plastic, for example one based on ABS resin, the additive has a tendency to migrate towards the surface of the moulded article and to form a whitish film there, which reduces the sheen and the aesthetic appearance of this moulded article.

In order to overcome the drawbacks of liquid antistatic agents, it has been envisaged to use solid antistatic agents. Solid antistatic agents which have been envisaged are C₁₆-C₁₈ ethoxylated amines which are in pasty form. Another solid antistatic agent, which is commercially available from the company CECA, consists of 75 parts by weight of C₁₆-C₁₈, ethoxylated amines and 25 parts by weight of calcium stearate.

However, these known solid antistatic agents still have the drawback of forming agglomerates when they are used in the stock mixture technique, in particular with ABS resins loaded with pigments and dyes such as TiO₂. The formation of these brittle agglomerates greatly disrupts the supply and metering of the stock mixture during the formulation of the final composition on a twin-screw extruder.

The object of the present invention is thus to provide a novel solid antistatic agent which overcomes the drawbacks mentioned above for liquid/solid antistatic agents and which avoids the formation of brittle agglomerates, in particular when it is used in the technique of stock mixtures.

According to the invention, the above aims are achieved by preparing an antistatic agent which comprises:
(a) 40 to 99% by weight of a C₁₅-C₂₀, preferably C₁₆-C₁₈, ethoxylated amine or a mixture of C₁₅-C₂₀, preferably C₁₆-C₁₈, ethoxylated amines; and
(b) 60 to 1% by weight, relative to the total weight of the components (a) and (b), of a solidification component consisting of synthetic hydrotalcites of formula (Mg)ₐ(Al)_{b}(CO₃)ₓ(OH)_{y}(H₂O)_{z}, in which 2 ≤ a ≤ 6, 1 ≤ b ≤ 3, 1 ≤ x ≤ 5, 8 ≤ y ≤ 14 and 0 ≤ z ≤ 3, and mixtures thereof.

Preferably, the antistatic agent according to the invention comprises 40 to 95%, and better still 40 to 90%, by weight of C₁₅-C₂₀ ethoxylated amines and 60 to 5%, and better still 60 to 10%, by weight of solidification component.

Even more preferably, the solid, antistatic agent comprises from 70 to 90% by weight of a C₁₅-C₂₀ ethoxylated amine or a mixture thereof and 30 to 10% by weight of the solidification component.

The use of hydrotalcite as a solidification component has the advantage that, when mixed with the ethoxylated amine, this compound leads to a synergum which improves the antistatic properties of the final compositions surprisingly.

Synthetic hydrotalcites are known compounds, which are commercially available, for example under the name DHT4A from the company Kowa or L55R2 from the company Reheis.

The C₁₅-C₂₀ ethoxylated amines are well-known compounds which are commercially available from various companies, such as Akzo, ICI and Ceca-Atochem.

The present invention also relates to polymer compositions comprising, per 100 parts by weight of polymer components, from 0.1 to 40, preferably 0.1 to 15, parts by weight of an antistatic agent according to the invention. Preferably, the antistatic agent is present in an amount of from 0.5 to 2.5 parts by weight relative to the weight of the polymer components of the composition.

In addition, the compositions according to the invention can contain up to 6% by weight, relative to the total weight of the composition, of silica, of alumina or of a mixture of silica and alumina, so as to improve the resistance to caking of these compositions.

The polymer components which are useful in the antistatic compositions according to the invention are olefin polymers and copolymers, styrene polymers and copolymers, acrylic and methacrylic polymers and copolymers, vinyl polymers and copolymers, and alloys thereof.

Among the olefin polymers and copolymers which are useful in the compositions of the present invention, mention may be made of polyolefins such as polyethylenes, polypropylenes, polybutylenes and olefin copolymers such as ethylene-propylene copolymers.

Among the styrene polymers and copolymers which are useful in the compositions of the present invention, mention may be made of styrene homopolymers, homopolymers of alkylstyrene such as α-methylstyrene, high impact shock strength (HIPS) polystyrenes and grafted styrene polymers.

A recommended class of styrene polymers which are useful in the compositions of the present invention are high impact shock strength (HIPS) polystyrenes. These high impact shock strength polymers are generally prepared by polymerization by grafting mixtures of styrene and optionally one or more additional copolymerizable vinyl monomers in the presence of a rubbery polymer trunk. Similar resins may also be prepared by mixing a polymer of rigid matrix with a grafted rubbery trunk. The comonomers which may be used in mixtures with styrene for the preparation of rigid styrene copolymers, as well as for use as grafting monomers, comprise monomers chosen from the ethylstyrene form, halostyrenes, vinylalkylbenzenes such as vinyltoluene, vinylxylene and butylstyrene, acrylonitrile, methacrylonitrile, lower alkylesters of methacrylic acid, and mixtures thereof. In the high impact strength styrene resins, the rubbery polymer trunk normally constitutes from 5 to 80%, preferably from 5 to 50%, of the total weight of the grafted polymer, and comprises rubbery copolymers chosen from polybutadiene, polyisoprene, rubbery styrene-diene copolymers, acrylic rubber, nitrile rubber and olefin rubbers, such as PDM and PR. In addition, other styrene polymers known in the art may be used in the alloy compositions of the invention.

As specific examples of grafted polymers which are useful in the compositions of the present invention, mention may be made of resins of emulsion and bulk acrylonitrile/butadiene/styrene (ABS) polymer type, methyl methacrylate/butadiene/acrylonitrile/styrene (MABS) resins, resins of styrene/butadiene (HIPS) grafted polymer type and methyl methacrylate/butadiene/styrene (MBS) resins.

As specific examples of styrene polymers which may be used in the present invention, mention may be made of polystyrene and styrene copolymers such as styrene/acrylonitrile (SAN) copolymers, styrene/methacrylic ester copolymers, resins of styrene/acrylonitrile/maleic anhydride (SAMA) terpolymer type, resins of styrene/maleic anhydride (SMA) copolymer type, similar polymers comprising N-phenyl substituted and differently and similarly substituted N-phenylmaleimides, and mixtures thereof. In addition, styrene-butadiene-styrene (SBS) copolymers and synthetic butyl rubbers (SBR) may also be used. Moreover, similar copolymer resins in which some of the styrene monomer component is replaced by other styrene monomers such as α-methylstyrene, halostyrenes or vinyltoluene may also be used. It is also possible to use mixtures or alloys of the above styrene polymers. Lastly, mixtures of the above styrene polymers and one or more polyphenylene ethers, polymers of polyvinyl chloride, polyamide and polycarbonate type and other polymers known generally in the art for alloying with styrene polymers may also be used. These additional polymers are generally known in the art and are described in Modern Plastic Encyclopedia, 1986-1987, McGraw-Hill, Inc., New York, USA.

The styrene polymers which are useful in the present invention also comprise polymers with a core-shell structure. The styrene polymers are generally prepared by emulsion or bulk polymerization bulk emulsion or bulk suspension.

The styrene polymers particularly recommended for the compositions of the present invention are ABS resins, in particular ABS resins containing from 4 to 70% by weight of butadiene relative to the total weight of the resin, and alloys of ABS resins and styrene/acrylonitrile (SAN) copolymers. When the ABS resin is in powder form, it preferably contains 10 to 70% by weight of butadiene. When the ABS resin is in granular form, it preferably contains 4 to 40% by weight of butadiene, and better still 4 to 30% by weight.

The alloys particularly recommended for the compositions of the invention are ABS/SAN alloys containing 10 to 80 parts by weight of ABS resin and 90 to 20 parts by weight of SAN copolymer. Preferably, the resins recommended for the compositions of the invention are ABS/SAN alloys containing 10 to 40 parts by weight of ABS resin and 90 to 60 parts by weight of SAN copopolymer [sic].

Among the acrylic and methacrylic polymers and copolymers which are useful in the present invention, mention may be made of the coplymers [sic] derived from acrylic acid, for example acrylic esters, with styrene, vinyl chloride, methacrylic acid derivatives and acetic acid esters, poly(alkyl methacrylates) such as poly(methyl methacrylate) and poly(alkyl acrylates).

Among the vinyl polymers and copolymers which may be mentioned are poly(vinyl chloride), poly(vinyl acetate), poly(vinylbenzenes), ethylene-vinyl acetate copolymers and polyvinyl alcohols.

The compositions according to the invention may also contain adjuvants generally used in styrene polymer and polyolefin compositions, such as lubricants, pigments, dyes, UV stabilizers, antioxidants, flame retardants and stretching and/or reinforcing fillers.

Among the lubricants which may be used in the compositions of the present invention, mention may be made, for example, of magnesium stearate, zinc stearate, polyethylene wax, paraffin wax, ethylene oxide and propylene oxide wax, butyl stearate, glyceryl monostearate, barium stearate, sodium stearate, stearyl alcohol and octyl behenate.

Among the inorganic fillers which may be used in the compositions of the present invention, mention may be made of talc, barium sulphate, calcium carbonate, magnesium aluminium hydroxycarbonate and calcium aluminium hydroxycarbonate.

The flame retardants which may be used in the compositions of the present invention are any flame retardants or mixture of flame retardants known to impart a flame-retardant nature to compositions based on styrene polymers or polyolefins. Among the flame retardants which may be mentioned are flame-retardant organic compounds such as tetrabromobisphenol, bis(tribromophenoxyethane), polybromodiphenyl ether, polybromophenol, poly(bromophenylalkyl ethers), poly(bromobenzyl acrylate) or polyacrylate, polybromocyclododecane, polybromostyrene, polybromophenylmaleimide, bromoepoxy bromoepoxy monomers or polymers, and copolycarbonates derived from a halo-substituted diphenol and a diphenol, the halogen preferably being chlorine or bromine.

Phosphate compounds, in particular organic phosphates, may also be used as flame retardant.

Preferably also, the haloorganic flame retardant is used in combination with a synergistic compound such as an antimony compound, for example antimony oxide.

The compositions of the present invention may also contain dyes and pigments such as, for example, titanium oxide, ultramarine blue or carbon black.

When the antistatic agent used in the compositions of the invention contains no magnesium oxide, it is necessary to add magnesium oxide to the composition according to the invention. The aim of the magnesium oxide in this case is to remove the residual traces of acid and thus to avoid corrosion of the moulds during moulding of the compositions. It is recommended in this case to use an amount of from 0.1 to 0.15 parts by weight of magnesium oxide per 100 parts of polymer components of the composition. Obviously, when an antistatic agent according to the invention which already contains magnesium oxide or hydrotalcite is used, it is not necessary to make a further addition thereof to the compositions.

In the examples which follow Examples 1 to 8 are comparative and Example 9 illustrates the invention. In the examples, except where otherwise mentioned, all the percentages and parts are expressed by weight.

### Comparative example A and Examples 1 to 3

In Examples 1 to 3, antistatic agents according to the invention were prepared by mixing together the constituents indicated in Table 1 below. Table 1 also indicates an antistatic additive (A) marketed by the company Ceca and comprising 75% by weight of C₁₆-C₁₈ ethoxylated amines and 25% by weight of calcium stearate.

Table 1 also indicates the physical properties of these antistatic additives.

**TABLE 1**

| Example No. | A | 1 | 2 | 3 |
|---|---|---|---|---|
| Composition | | | | |
| - C₁₆-C₁₈ ethoxylated amines | 75 | 87 | 70 | 82 |
| - Calcium stearate | 25 | - | - | - |
| - MgO | - | 13 | 30 | - |
| - Ethylenebis(stearamide) wax | - | - | - | 18 |
| | | | | |

| Physical properties | | | | |
|---|---|---|---|---|
| Melting peak °C (differential scanning calorimetry) | 44 | 49 | 47 | 49 |
| | | | | |
| Humidity (Karl-Fisher ) % | 1.45 | 1.15 | 0.8 | 1 |
| | | | | |

| Thermogravimetric analysis | | | | |
|---|---|---|---|---|
| (volatility) °C | | | | |
| Weight loss: | | | | |
| - 1% | 90 | 125 | - | - |
| - 2% | 125 | 200 | - | - |
| - 3% | 200 | 225 | - | - |
| - 5% | 230 | 250 | - | - |
| | | | | |
| Form | White flakes | Yellowish flakes | | |
| | | | | |
| Flowability | Reference | +¹ | + | NT² |

| | | | | |
|---|---|---|---|---|
| 1 : higher | | | | |
| 2 : not tested | | | | |

Table 1 shows that the antistatic additives, of Examples 1 to 3 have better physical properties than "A" the commercial antistatic agent. In particular, they have a markedly higher melting peak, a lesser residual humidity and, for the antistatic additives of Examples 1 and 2, much better flowability.

### Comparative Examples B and C and Examples 4 and 5

Stock mixtures are prepared by mixing together the ingredients indicated in Table 2 in a Henschel mixer having a rotor rotating at a speed of 730 rpm. The mixing time was 3 minutes and the ingredients were loaded in the following order: half of the grafted ABS resin was introduced first, followed by introduction, in order, of titanium oxide, ultramarine blue 51, antistatic agent, then optionally magnesium oxide and, lastly, the remainder of the grafted ABS resin. The grafted ABS resin used was a resin marketed by the company General Electric Plastics ABS SA G350, having the following composition: 37.5% by weight of styrene, 50% by weight of butadiene, 12.5% by weight of acrylonitrile.

The temperature while the ingredients were mixed together in order to obtain the stock mixtures in the mixer was 60°C.

The compositions of the various stock mixtures obtained as indicated above are collated in Table 2.

The appearance of the stock mixtures obtained, as well as the oven caking temperature for the various antistatic agents, are indicated in Table 3.

The oven caking test is performed in the following manner:

A 3 cm layer of antistatic agent is placed in a crystallizing dish 11 cm in diameter. A moulded disc 10 cm in diameter made of ABS is then placed on this layer and a 700 g metal weight is placed on top of this disc. The assembly is then placed in a ventilated oven at a determined temperature for 4 hours. After cooling for 15 minutes, an observation is made as to whether flakes or grains of powder have adhered to the ABS disc and whether there are agglomerates of flakes. Tests were carried out at four different oven temperatures: 35, 40, 45 and 50°C. The temperature selected is that for which no agglomerates of flakes were observed.

This oven caking test is an indication of the tendency of the antistatic agent to form agglomerates on storage of a palette of sacks containing the antistatic agent during hot periods in summer. Consequently, the higher the caking temperature of the antistatic agent, the lower the risk of formation of agglomerates during the manufacture of the stock mixtures.

**TABLE 2**

| Example No. | grafted ABS resin (kg) | TiO₂ (kg) | Ultramarine blue S1 (kg) | Antistatic agent | | MgO (kg) |
|---|---|---|---|---|---|---|
| | | | | A (kg) | Ex 1 (kg) | |
| Comparative B | 422 | 209 | 1.18 | 24.964 | - | 3.121 |
| Comparative C | 422 | 209 | 1.18 | 71.771 | - | 3.121 |
| Example 4 | 422 | 209 | 1.18 | - | 24.264 | - |
| Example 5 | 422 | 209 | 1.18 | - | 71.771 | - |

**TABLE 3**

| Appearance of the stock mixture | Comparative Ex. B Agglomerates 20 to 50 mm in diameter | Comparative Ex. C Agglomerates 20 to 50 mm in diameter | Ex. 3 No agglomerates | Ex. 4 No agglomerates |
|---|---|---|---|---|
| | Antistatic agent 75% by weight C₁₆-C₁₈ ethoxylated amines 25% by weight calcium stearate | Ex. 1 | | |
| Oven caking temperature °C | 40 | 50 | | |

### Comparative Example D and Examples 5 to 7

Compositions according to the invention and a comparative composition were manufactured by mixing together the ingredients as indicated in Table 4. The physical properties of these compositions have also been indicated in Table 5.

Table 5 shows that the compositions according to the invention have properties which are similar to, if not better than, the compositions of the prior art containing a commercial solid antistatic additive.

**TABLE 4**

| Composition (parts by weight) | | | | | | | | | |
|---|---|---|---|---|---|---|---|---|---|
| Ex. No. | ABS resin¹ | SAN resin² | Internal lubricant | Antistatic agent | | | | MgO | Carbon black |
| | | | | A | Ex. 1 | Ex. 2 | Ex. 3 | | |
| Comp.D | 30 | 70 | 1.3 | 0.8 | - | - | - | 0.1 | 1 |
| Ex. 5 | 30 | 70 | 1.3 | - | 0.8 | - | - | - | 1 |
| Ex. 6 | 30 | 70 | 1.3 | - | - | 0.8 | - | - | 1 |
| Ex. 7 | 30 | 70 | 1.3 | - | - | - | 0.8 | - | 1 |

| | | | | | | | | | |
|---|---|---|---|---|---|---|---|---|---|
| 1. Resin ABS G350 (GENERAL ELECTRIC PLASTICS ABS S.A.) styrene 37.6%/butadiene 50%/acrylonitrile 12.5%. | | | | | | | | | |
| 2. Resin SAN-S 2856 - acrylonitrile 28%/styrene 72%. | | | | | | | | | |

**TABLE 5**

| Physical properties | | | | |
|---|---|---|---|---|
| | Comparative Ex. D | Example 5 | Example 6 | Example 7 |
| Meld index (220°C/10 kg) g/10 minutes | 26.1 | 24 | 21.5 | 24 |
| | | | | |
| Capillary rheometer (230°C/1000 s⁻¹) Pa s | 227 | 227 | 235 | 228 |
| | | | | |
| Izod impact strength kJ/m² (1A - 23°C) | 13 | 12.2 | 12.1 | 13.2 |
| | | | | |
| VICAT B120 °C softening temperature | 101 | 102 | 102.5 | 101.5 |
| | | | | |
| Brilliance: | | | | |
| at 20° | 54.5 | 55.5 | 54 | 54 |
| at 60° | 89 | 90 | 91 | 89.5 |
| Film | 204 | 200 | 215 | 216 |

### COMPARATIVE EXAMPLE E AND EXAMPLES 8 AND 9

The compositions of Table 6 below were prepared, as in Examples 5 to 7. The physical properties of the compositions were determined as in the above examples. A "dust-repellent" test was also carried out. The results are given in Table 7 below.

**TABLE 6**

| Composition (parts by weight) | | | | | | | |
|---|---|---|---|---|---|---|---|
| Ex. No. | ABS resin⁴ | SAN resin⁵ | Internal Lubricant³ | Antistatic agent | | | Carbon black |
| | | | | Ethoxylated amines | MgO | Hydrotalcite DHT 4A | |
| Comp.E | 26 | 74 | 2 | - | - | - | 1 |
| Ex 8 | 26 | 74 | 2 | 0.73 | 0.07 | - | 1 |
| Ex 9 | 26 | 74 | 2 | 0.73 | - | 0.07 | 1 |

| | | | | | | | |
|---|---|---|---|---|---|---|---|
| 3. Ethylene bis-stearamide wax. | | | | | | | |
| 4. TAG 63E (GENERAL ELECTRIC PLASTICS ABS S.A) | | | | | | | |
| 5. SAN S 3457 (GENERAL ELECTRIC PLASTICS ABS S.A.) | | | | | | | |

**TABLE 7**

| | **COMPARATIVE EXAMPLE E** | **EXAMPLE 8** | **EXAMPLE 9** |
|---|---|---|---|
| Hot melt index (220°C/10kg) g/10min | 22.5 | 24.8 | 25.8 |
| | | | |
| Capillary rheometer (230°C/1000s⁻¹) Pa.s | 241 | 236 | 234 |
| | | | |
| Izod impact strength (1A-23°C) hJ/m² | 11.8 | 13.2 | 14.2 |
| | | | |
| VICAT B softening temperature (120°C) °C | 103.5 | 103 | 102.5 |
| | | | |
| Brilliance | | | |
| at 20° | 77.5 | 78 | 77 |
| at 60° | 94 | 94 | 93.5 |
| | | | |
| Film | 138 | 104 | 102 |
| Dust-repellent test | - | + | ++ |
| - Poor + Moderate ++ Good | | | |

The dust-repellent test is performed by spraying iron powder of given particle size for one minute onto plates obtained by injection-moulding of the compositions. The amount of iron powder which adheres to the plates is determined visually. The lower the amount, the better is the dust-repellent nature of the composition.

## Claims

1. Solid antistatic agent for a polymer composition, characterized in that it comprises:
(a) 40 to 99% by weight of a C₁₅ to C₂₀ ethoxylated amine or a mixture of C₁₅ to C₂₀ ethoxylated amines; and
(b) 60 to 1% by weight, relative to the total weight of (a) and (b), of a solidification agent consisting of synthetic hydrotalcites of formula (Mg)ₐ(Al)_{b}(CO₃)ₓ (OH)_{y}(H₂O)_{z}, in which 2 ≤ a ≤ 6, 1 ≤ b ≤ 3, 1 ≤ x ≤ 5, 8 ≤ y ≤ 14 and 0 ≤ z ≤ 3, and mixtures thereof.

2. Solid antistatic agent according to claim 1, characterized in that it comprises 40 to 95% by weight of component (a) and 60 to 5% by weight of component (b).

3. Solid antistatic agent according to claim 1 or 2, characterized in that it comprises 40 to 90% by weight of component (a) and 60 to 10% by weight of component (b).

4. Antistatic agent according to any preceding claim characterized in that it comprises 70 to 90% by weight of component (a) and 30 to 10% by weight of component (b).

5. Antistatic agent according to any one of claims 1 to 4, characterized in that the component (a) is a C₁₆-C₁₈ethoxylated amine or a mixture of C₁₆-C₁₈ ethoxylated amines.

6. Polymer composition, characterized in that it comprises, per 100 parts by weight of polymer components, from 0.1 to 40, parts by weight of an antistatic agent according to any one of claims 1 to 5.

7. Composition according to claim 6 characterized in that it comprises 0.1 to 15 parts by weight of antistatic agent.

8. Composition according to claim 6, characterized in that it comprises 0.5 to 2.5 parts by weight of antistatic agent.

9. Composition according to claim 6, 7 or 8, characterized in that the polymer component is chosen from the group formed by olefin polymers and copolymers and alloys thereof, styrene polymers and alloys thereof, acrylic and methacrylic polymers and copolymers and alloys thereof and vinyl polymers and copolymers and alloys thereof.

10. Composition according to claim 9, characterized in that the styrene polymers are chosen from polystyrenes, polyalkylstyrenes, high impact strength polystyrenes, emulsion and bulk acrylonitrile/butadiene/styrene (ABS) resins, styrene/acrylonitrile resins, styrene resins and synthetic butyl rubbers, and alloys thereof.

11. Composition according to claim 10, characterized in that the polymer composition comprises an ABS resin containing from 4 to 70% by weight of butadiene relative to the total weight of the ABS resin.

## Patentansprüche

1. Festes antistatisches Mittel für eine Polymer-Zusammensetzung, dadurch gekennzeichnet, dass es umfasst:
(a) 40 bis 99 Gew.-% eines ethoxylierten C₁₅-C₂₀-Amins oder einer Mischung von ethoxylierten C₁₅-C₂₀-Aminen und
(b) 60 bis 1 Gew.-%, bezogen auf das Gesamtgewicht von (a) und (b), eines Verfestigungsmittels bestehend aus synthetischen Hydrotalciten der Formel (Mg)ₐ(Aℓ)_{b}(CO₃)ₓ(OH)_{y}(H₂O)_{z}, in der 2 ≦ a ≦ 6, 1 ≦ b ≦ 3, 1 ≦ x ≦ 5, 8 ≦ y ≦ 14 und 0 ≦ z ≦ 3, und deren Mischungen.

2. Festes antistatisches Mittel nach Anspruch 1, dadurch gekennzeichnet, dass es 40 bis 95 Gew.-% der Komponente (a) und 60 bis 5 Gew.-% der Komponente (b) umfasst.

3. Festes antistatisches Mittel nach Anspruch 1, dadurch gekennzeichnet, dass es 40 bis 90 Gew.-% der Komponente (a) und 60 bis 10 Gew.-% der Komponente (b) umfasst.

4. Festes antistatisches Mittel nach Anspruch 1, dadurch gekennzeichnet, dass es 70 bis 90 Gew.-% der Komponente (a) und 30 bis 10 Gew.-% der Komponente (b) umfasst.

5. Antistatisches Mittel nach einem der Ansprüche 1 bis 4, dadurch gekennzeichnet, dass die Komponente (a) ein ethoxyliertes C₁₆-C₁₈-Amin oder eine Mischung von ethoxylierten C₁₆-C₁₈-Aminen ist.

6. Polymer-Zusammensetzung, dadurch gekennzeichnet, dass sie auf 100 Gewichtsteile Polymerkomponenten von 0,1 bis 40 Gewichtsteile eines antistatischen Mittels nach einem der Ansprüche 1 bis 5 umfasst.

7. Zusammensetzung nach Anspruch 6, dadurch gekennzeichnet, dass sie 0,1 bis 15 Gewichtsteile antistatisches Mittel umfasst.

8. Zusammensetzung nach Anspruch 6, dadurch gekennzeichnet, dass sie 0,5 bis 2,5 Gewichtsteile antistatisches Mittel umfasst.

9. Zusammensetzung nach Anspruch 6, 7 oder 8, dadurch gekennzeichnet, dass die Polymerkomponente aus der durch Olefinpolymere und Copolymere und Legierungen davon, Styrolpolymere und Legierungen davon, Acryl- und Methacrylpolymere und Copolymere und Legierungen davon und Vinylpolymere und Copolymere und Legierungen davon gebildeten Gruppe ausgewählt ist.

10. Zusammensetzung nach Anspruch 9, dadurch gekennzeichnet, dass die Styrolpolymeren ausgewählt sind aus Polystyrolen, Polyalkylstyrolen, hochschlagfesten Polystyrolen, Emulsions- und Massen-Acrylnitril/Butadien/Styrol(ABS)-Harzen, Styrol/Acrylnitril-Harzen, Styrolharzen und synthetischen Butylkautschuken und deren Legierungen.

11. Zusammensetzung nach Anspruch 10, dadurch gekennzeichnet, dass die Polymer-Zusammensetzung ein ABS-Harz umfasst, das von 4 bis 70 Gew.-% Butadien, mit Bezug auf das Gesamtgewicht des ABS-Harzes, umfasst.

## Revendications

1. Agent antistatique solide pour une composition à base de polymère, caractérisé en ce qu'il comprend :
(a) 40 à 99 % en poids d'une amine éthoxylée en C₁₅ à C₂₀ ou d'un mélange d'amines éthoxylées en C₁₅ à C₂₀, et
(b) 60 à 1 % en poids, par rapport au poids total de (a) et de (b), d'un agent de solidification constitué d'hydrotalcites synthétiques de formule (Mg)ₐ(Al)_{b}(CO₃)ₓ(OH)_{y}(H₂O)_{z}, dans laquelle 2 ≤ a ≤ 6, 1 ≤ b ≤ 3, 1 ≤ x ≤ 5, 8 ≤ y ≤ 14 et 0 ≤ z ≤ 3, ou de leurs mélanges.

2. Agent antistatique solide selon la revendication 1, caractérisé en ce qu'il comprend 40 à 95 % en poids du constituant (a) et 60 à 5 % en poids du constituant (b).

3. Agent antistatique solide selon la revendication 1 ou 2, caractérisé en ce qu'il comprend 40 à 90 % en poids du constituant (a) et 60 à 10 % en poids du constituant (b).

4. Agent antistatique selon l'une quelconque des revendications précédentes, caractérisé en ce qu'il comprend 70 à 90 % en poids du constituant (a) et 30 à 10 % en poids du constituant (b).

5. Agent antistatique selon l'une quelconque des revendications 1 à 4, caractérisé en ce que le constituant (a) est une amine éthoxylée en C₁₆ à C₁₈ ou un mélange d'amines éthoxylées en C₁₆ à C₁₈.

6. Composition à base de polymère, caractérisée en ce qu'elle contient, pour 100 parties en poids de constituants qui sont des polymères, 0,1 à 40 parties en poids d'un agent antistatique selon l'une quelconque des revendications 1 à 5.

7. Composition selon la revendication 6, caractérisée en ce qu'elle contient 0,1 à 15 parties en poids d'agent antistatique.

8. Composition selon la revendication 6, caractérisée en ce qu'elle contient 0,5 à 2,5 parties en poids d'agent antistatique.

9. Composition selon l'une quelconque des revendications 6 à 8, caractérisée en ce que le constituant qui est un polymère est choisi parmi les polymères ou copolymères d'oléfine et leurs mélanges, les polymères styréniques et leurs mélanges, les polymères ou copolymères acryliques ou méthacryliques et leurs mélanges, et les polymères ou copolymères vinyliques et leurs mélanges.

10. Composition selon la revendication 9, caractérisée en ce que les polymères styréniques sont choisis parmi les polystyrènes, les poly-(alkylstyrènes), les polystyrènes à résistance élevée aux chocs, les résines d'acrylonitrile/butadiène/ styrène (ABS) en masse ou en émulsion, les résines de styrène et d'acrylonitrile, les résines de styrène et les caoutchoucs butyl synthétiques, et leurs mélanges.

11. Composition selon la revendication 10, caractérisée en ce que la composition à base de polymère comprend une résine ABS contenant 4 à 70 % en poids de butadiène par rapport au poids total de la résine ABS.
